**Europäisches Patentamt**

**European Patent Office**

**Office européen des brevets**

(19)

(11) Veröffentlichungsnummer: **0 037 546**

**A1**

(12) # EUROPÄISCHE PATENTANMELDUNG

(21) Anmeldenummer: **81102392.8**

(22) Anmeldetag: **30.03.81**

(51) Int. Cl.³: **C 01 G 21/00**
C 03 C 1/02, C 09 C 1/14

(30) Priorität: **03.04.80 DE 3013261**

(43) Veröffentlichungstag der Anmeldung:
**14.10.81 Patentblatt 81/41**

(84) Benannte Vertragsstaaten:
**AT BE DE FR GB IT NL**

(71) Anmelder: **Goslarer Farbenwerke Dr. Hans Heubach GmbH. & Co. KG**
**Heubachstrasse**
**D-3394 Langelsheim 1(DE)**

(72) Erfinder: **Heubach, Rainer**
**Nonnenweg 14**
**D-3380 Goslar(DE)**

(72) Erfinder: **Adrian, Gerhard, Dipl.-Chem.**
**Talstrasse 20a**
**D-3380 Goslar 1(DE)**

(72) Erfinder: **Gawol, Manfred**
**Altenauer Strasse 15**
**D-3392 Clausthal-Zellerfeld(DE)**

(74) Vertreter: **Müller-Boré, Deufel, Schön, Hertel**
**Patentanwälte**
**Postfach 86 07 20 Siebertstrasse 4**
**D-8000 München 86(DE)**

(54) **Verfahren zur Herstellung von staubfreien und rieselfähigen Bleiträger-Compounds.**

(57) Staubfreie und rieselfähige Bleiträger-Compounds mit vergleichsweise niedrigem Gehalt an Zusatzstoffen, die für die Glas-, Keramik und Akkumulatorenindustrie besonders geeignet sind, werden erhalten durch Versetzen der Bleiträger mit mindestens einem wasserlöslich organisch makromolekularen Stoff mit Wasserretentionseigenschaften in Form einer wässrigen Lösung, gegebenenfalls zusammen mit einer als Stabilisiermittel wirkenden Verbindung, Vermischen in einer Scherkräfte erzeugenden Mischvorrichtung und anschließendes Granulieren.

Geeignete wasserlösliche organische makromolekulare Stoffe sind z.B. Celluloseäther, Stärke und deren Derivate und Abbauprodukte, Polyvinylalkohole und Polyacrylate, die vorzugsweise in Konzentrationen von etwa 0,02 - 0,5%, bezogen auf Bleiträger, eingesetzt werden.

Geeignete Stabilisiermittel sind z.B. Mono- und Oligosaccharide, Polyalkohole, sowie Säuren, Alkalien und Wasserglas, die vorzugsweise in Konzentrationen von höchstens 3 %, bezogen auf Bleiträger, eingesetzt werden.

## Verfahren zur Herstellung von staubfreien und rieselfähigen Bleiträger-Compounds

Die Erfindung betrifft den in den Patentansprüchen gekennzeichneten Gegenstand.

Bleiverbindungen zählen zu den gesundheitsschädlichen Arbeitsstoffen, durch welche in der Glas-, Keramik- und Akkumulatorenindustrie Arbeitsplatzgefährdungen durch Verstaubung verursacht werden können.

Der zur Gesundheitsgefährdung führende Staub kann in verschiedenen Arbeitsstadien auftreten, z.B. bereits bei der Übernahme des angelieferten Rohstoffs, beim Transport in Förderanlagen, bei der Dosierung sowie bei der danach erfolgenden Weiterverarbeitung.

Verfahren zur Verminderung der Staubung von Bleiträgern sind bekannt. So wird z.B. in der FR-PS 11 62 471 ein Verfahren zur Granulatherstellung beschrieben, bei dem Bleimennige und/oder Bleiglätte auf eine Temperatur von $300^{\circ}$C erhitzt und unter ständigem Rähren mit Natrium- oder Kaliumwasserglas, mehrwertigen Alkoholen oder Dispersionen von Kunststoffen wie Polyvinylchlorid und -acrylsäure oder Polystyrol sowie Sulfitlaugen oder Melasserückständen versetzt werden. Der Anteil an Verdünnungs-, Binde- und Härtungsmitteln soll 5 bis 15 % betragen.

-2-

Aus der DE-OS 26 04 457 ist granuliertes Bleioxid bekannt, das durch Granulieren des Bleioxids unter Zusatz von Kaliumsilikatlösung gewonnen ist. Der Gewichtsanteil des Kaliumsilikates in den Granulaten soll dabei zwischen 2 bis 5,5 %, vorzugsweise zwischen 3 bis 4,5 %, liegen, entsprechend etwa 9 bis 13 % Kaliumsilikatlösung.

Die bekannten Verfahren ergeben zwar staubfreie Bleioxidgranulate, haben jedoch verschiedene Nachteile. So enthalten z.B. die nach diesen Verfahren hergestellten Granulate erhebliche Mengen an organischer Substanz sowie Natrium- und Kaliumionen bzw. Kaliumsilikat. Der hohe Anteil dieser Fremdstoffe hat den Nachteil, daß diese Bleiträger für viele Glas-, Keramik- und Batterieanwendungen nicht in Frage kommen, und die zur Erzielung einer vollkommenen Staubfreiheit erforderlichen großen Menge von 5 - 15 % Binde-, Verdünnungs- und Härtungsmittel bedingen eine erhebliche Verteuerung der Bleioxidgranulate.

Die aufgezeigten Nachteile werden erfindungsgemäß in besonders einfacher und vorteilhafter Weise überwunden. Es werden staubfreie und rieselfähige Bleiträger erhalten durch Zusatz von und Mischen mit in den jeweiligen Anwendungsgebieten verträglichen wasserlöslichen organischen makromolekularen Stoffen bei vergleichsweise sehr niedriger Dosierung und, ohne daß aktiv erhitzt werden muß, bei den durch Eigenerwärmung auftretenden Temperaturen.

Bei den erfindungsgemäß verwendbaren wasserlöslichen organischen makromolekularen Stoffen, die selbst in sehr niedrigen Konzentrationen, den Bleiträgern zugemischt, zur Bildung von staubfreien und rieselfähigen Bleiträger-Compounds führen, handelt es sich z.B. um Celluloseäther wie Alkylcellulosen, Alkylhydroxyalkylcellulosen, gereinigte Carboxyalkylcellulosen oder Hydroxyalkylcellulosen, vorzugsweise solche mit mittlerer Viskosität.

In der gleichen Weise können Stärkeäther, insbesondere alkylierte Stärken, wofür methylierte oder äthylierte Stärken als Beispiel genannt seien, Polyvinylalkohole, Stärke, Stärkeabbauprodukte wie Dextrin und Polyacrylate verwendet werden.

Diese wasserlöslichen Stoffe sind aufgrund ihrer besonderen markomolekularen Struktur sowie ihrer Wasserretention in der Lage, rieselfähige und staubfreie Bleiträger-Compounds zu bilden, und das bereits in Konzentration von 0,1 bis 3 %, vorzugsweise 0,3 bis 0,5 %, bezogen auf Feststoffe, nach Vermischen beispielsweise in einem Teller- oder Muldenmischer. Bevorzugt ist hierfür aber ein Bereich von 0,02 - 0,5 %, insbesondere 0,04 - 0,3 %.

Um die gewünschte Staubfreiheit zu gewährleisten, ist eine Restfeuchte von 1 bis 6 %, vorzugsweise 4 %, anzustreben. Jedoch auch bei Feuchten unter 1 % ist bereits eine deutliche Verminderung der Staubung festzustellen.

Im Gegensatz zu der normalerweise üblichen Hartgranulierung von pulverförmigen Stoffen, bei der die entstehenden Granulate nach entsprechender mechanischer Beanspruchung teilweise zerstört werden und auf diese Weise wieder staubförmige Partikel entstehen, führt die erfindungsgemäße Behandlung von Bleioxiden z.B. in Gegenwart von Wasser zu einem mehr oder weniger weichen Granulat, das unter Druckeinwirkung zwar zerstörbar ist, wobei aber keine Staubbildung erfolgt.

Falls erforderlich, kann eine weitere Verbesserung der Stabilität der Bleiträger-Compounds erreicht werden, wenn außer den wasserlöslichen organischen makromolekularen Stoffen noch geringe Anteile an Monosacchariden, Oligosacchariden oder Polyalkoholen zugesetzt werden. Die funktionellen Gruppen dieser Verbindungen führen zu Reaktionen mit den Bleiträgern, wobei durch Salzbrückenbildung die erwähnte Stabilitätsverbesserung der Bleiträger-Compounds eintritt. Durch den Zusatz dieser Stabilisiermittel in Mengen von 0,1 bis 3 %, insbesondere 0,1 bis 1 % und vorzugsweise 0,2 bis 0,5 % sind Produkte erzielbar, deren Riesel- und Fließfähigkeit noch deutlich verbessert ist. In dieser Hinsicht haben sich auch Säuren wie $CH_3COOH$, $H_2SO_4$ und $HNO_3$ in Konzentrationen von etwa 0,2 bis 10 %, insbesondere 0,2 bis 2 % als vorteilhaft erwiesen, wobei Produkte erhalten wurden, deren Riesel- und Fließfähigkeit so ausgeprägt ist, daß selbst Röhrchen mit einem Durchmesser von unter 1 cm, wie sie beispielsweise in der Akkumulatorenindustrie als Röhrchenelektroden Verwendung finden, gefüllt werden können. Durch die sehr gleichmäßige Schüttung des Produktes in den Röhrchenelektroden kommt es auch zu Materialeinsparungen. Außerdem ist die Abschlammung aus den Elektroden nach Einsatz des Akkumulators geringer wie sie sonst beobachtet wird bei ungleichmäßiger Schüttung und Brückenbildung (über Hohlräumen) durch die eingefüllte Elektrodenmasse. Das sonst übliche Rütteln der Röhrchenelektroden bei der Befüllung, wie es bei Verwendung von pulverförmigen Bleiträgern erforderlich ist, erübrigt sich, und jegliche Staubentstehung wird vermieden. In dieser Hinsicht zeigte sich die Anwendung von $H_2SO_4$ als besonders vorteilhaft. Durch die Mitverwendung von Schwefelsäure wurden hervorragende Bleiträger-Compounds für die Akkumulatoren-Industrie erhalten, wobei die sonst bei Anwesenheit von Wasser stattfindende Oxidation durch Luftsauerstoff des in diesen Bleiträger-Compounds vorhandenen metallischen Bleis weitgehend unterbunden und die Stabilität auch in dieser Hinsicht erreicht wird. Die Anwesenheit von Schwefelsäure in diesen Compounds stört bei deren Verwendung für die Herstellung von positiven und negativen Bleielektroden-Massen nicht, da ja Schwefelsäure bekanntermaßen bei der Formierung der Bleielektroden wie auch bei der Füllung des Bleiakkumu-

-5-

.lators verwendet wird.

Die Wirkung der Säuren dürfte darauf zurückzuführen sein, daß nach Zugabe der Säuren Reaktionsprodukte entstehen und ebenfalls Salzbrückenmechanismen, die Agglomeration und die Stabilität der Compound-Granulate günstig beeinflussen. Auch eine katalytische Wirkung auf die Umwandlung der Kristallmodifikation des Bleioxids ist gegeben. Dadurch wird eine Verbesserung der Oberflächenstruktur des Granulates erreicht, die durch Prozeßführung beim Mischen der Bleiträger mit den erfindungsgemäßen Zusätzen, insbesondere durch Anstieg der Temperatur durch Eigenerwärmung auf über 65°C, gesteuert werden kann.

Sehr vorteilhaft wirkt sich darüber hinaus die Anwesenheit von Salpetersäure bzw. der daraus entstandenen Nitrate in den Bleiträger-Compounds bei Glasschmelzprozessen aus, da dadurch eine oxidationsfördernde Wirkung erzielt wird.

Da die angewandten makromolekularen Stoffe und teilweise auch die Stabilisiermittel Wasserretention aufweisen, ist gewährleistet, daß die erfindungsgemäß hergestellten Produkte lagerstabil sind und ihre Staubfreiheit und Rieselfähigkeit auch bei längerer Lagerung beibehalten.

Eine weitere Verbesserung der Wasserretention bei Bleiträger-Compounds mit Ausnahme von hochbleihaltigem Bleistaub kann - falls erforderlich - erzielt werden, wenn außer den wasserlöslichen organischen makromolekularen Stoffen und organischen Stabilisiermitteln noch geringe Anteile an Alkali wie z.B. KOH oder NaOH und/oder Kali- bzw. Natronwasserglas als Stabilisiermittel zugegeben werden. Auch diese zusätzlichen Stabilisierungskomponenten können in äußerst niedrigen Konzentrationen zur Anwendung gelangen, z.B. in Konzentrationen von etwa 0,2 - 2 %, insbesondere 0,5 - 2 % NaOH oder KOH und von 0,5 - 5 %, insbesondere 0,5 - 3 % Wasserglas.

Bei Ausgangsstoffen mit fester Textur wie beispielsweise Bleioxid-Schmelzgranulat oder Bleisilikat dient das erfindungsgemäße Verfahren zur Abbindung der Staubanteile, die bei der Herstellung und Aufbereitung der Produkte entstanden sind.

Die erfindungsgemäß hergestellten Produkte besitzen somit extrem niedriges Staubungsverhalten, gute Rieselfähigkeit, Stabilität durch Wasserretention und sehr gutes Mischverhalten in Verarbeitungsmengen der Glas- und Keramikindustrie sowie sehr gute Riesel- bzw. Einfüllbarkeit von auf diese Weise hergestellten Bleimennige- bzw. Bleimennige-Bleistaub-Compounds und für positive Akkumulatorenmassen.

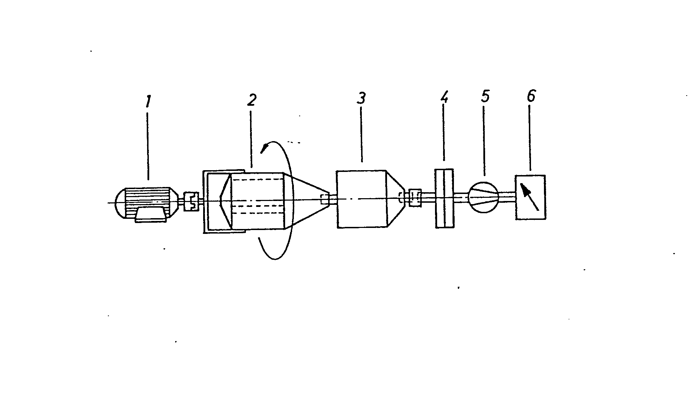

Um das Staubungsverhalten der verschiedenen Produkte zahlenmäßig erfassen zu können, wurde eine Apparatur entwickelt, die es ermöglicht, unter definierten Bedingungen die Staubung einzuleiten und zu bestimmen. In der beigefügten Figur ist die Apparatur veranschaulicht, worin bedeuten:

    1. Antriebsmotor
    2. rotierbares Staubentwicklungsgefäß
    3. Trommel zur Abtrennung grober Stäube
    4. Filter
    5. Vakuumpumpe
    6. Luftdurchsatzzähler.

Die angewandten Bedingungen waren:

| | |
|---|---|
| Staubentwicklungsgefäß | 2,5 l |
| Einwaage | 100 g |
| Meßzeit | 5 min |
| Umdrehungen | 30 UpM |
| Luftdurchfluß | 0,25 l/s |

In der folgenden Tabelle sind die erhaltenen Staubungswerte für einige als Ausgangsstoffe verwendete Bleiträger sowie für einige erfindungsgemäß hergestellte Bleiträger-Compounds aufgeführt.

| Produkte | Staubungsverhalten mg Staub/100 g Material |
|---|---|
| Bleimennige | 120 |
| Bleiglätte | 280 |
| Bleistaub | 40 |
| PbO-Schmelzgranulat | 160 |
| Bleisilikat | 90 |
| Compound nach Beispiel 1 | 2 |
| Compound nach Beispiel 4 | 2 |
| Compound nach Beispiel 6 | 3 |
| Compound nach Beispiel 7 | 2 |
| Compound nach Beispiel 9 | 3 |
| Compound nach Beispiel 10 | 4 |
| Compound nach Beispiel 12 | 2 |
| Compound nach Beispiel 14 | 3 |

Das erfindungsgemäße Verfahren ist nicht nur auf reine Bleiträger beschränkt. In Abhängigkeit vom Einsatzzweck können z.B. auch andere Glasbestandteile, insbesondere toxische Läuterungsmittel wie z.B. Antimon- und Arsentrioxid sowie Nitrate in die staubfreien und rieselfähigen Bleiträger-Compounds mit eingearbeitet werden. In entsprechender Weise können auch sogenannte Kristallwasserbildner zur Anwendung kommen, die im Zusammenwirken mit Feuchtigkeit Salzbrücken bilden und auf diese Weise die Stabilität der Compounds noch weiter verbessern, wie dies in der DE-OS 28 13 321 beschrieben ist. Auch andere Rohstoffe, wie z.B. CaO, $B_2O_3$, ZnO oder dergl. sowie der Glashauptbestandteil $SiO_2$ können in die Blei-träger-Compounds mit eingebracht werden. Auf diese Weise wird erreicht, daß außer der staubfreien Einbringung von gesundheitsschädlichen Zusatzstoffen gleichmäßig verteilte Schmelzkeime vorhanden sind, die die homogene Einschmelzung beschleunigen.

Die Erfindung wird durch die nachfolgenden Beispiele näher erläutert, wobei die angegebenen Teilangaben Gewichtsteile bedeuten. Das Mischen erfolgt in Scherkräfte-hervorrufenden Mischvorrichtungen, z.B. vom Typ der Teller- oder Muldenmischer.

Beispiel 1:

300 Tl. Bleimennige werden beispielsweise einem Teller- oder Muldenmischer zugeführt und anschließend mit 18 Tl. einer 3%igen Lösung von Methylcellulose (mittelviskos) gemischt. Nach einer Mischzeit von 10 Minuten bildet sich ein staubfreier und rieselfähiger Weichcompound, der auch nach längerer Lagerung diese Eigenschaften beibehält und bei mechanischer Beanspruchung seine Zusammensetzung nicht ändert.

Über- und Unterkorn können durch Siebung abgetrennt werden.

Beispiel 2:

100 Tl. Bleiglätte werden mit 6 Tl. einer 4%igen Lösung von methylierter Stärke wie in Beispiel 1 gemischt und zu einem staubfreien und rieselfähigen Compound granuliert.

Über- und Unterkorn können durch Siebung abgetrennt werden.

Beispiel 3:

300 Tl. Bleimennige werden mit 12 Tl. einer 2%igen Carboxymethylcellulose-Lösung (hochviskos) und 6 Tl. einer 10%igen Stärkelösung oder 6 Tl. einer 10%igen Dextrinlösung wie in Beispiel 1 gemischt, wobei sich nach entsprechender Mischzeit ein staubfreier und rieselfähiger Compound bildet.

Über- und Unterkorn können durch Siebung abgetrennt werden.

Beispiel 4:

300 Tl. Bleiglätte werden mit 18 Tl. einer 5%igen
Polyvinylalkohol-Lösung, die 0,6 Tl. Gluconsäure enthält, wie in Beispiel 1 in einem Teller- oder Muldenmischer gemischt und zu einem staubfreien und rieselffähigen, besonders oberflächenharten Compound granuliert.

Über- und Unterkorn können durch Siebung abgetrennt werden.

Beispiel 5:

300 Tl. Bleiglätte werden mit 12 Tl. einer schwach alkalischen 2%igen Polyacrylat-Lösung und 6 Tl. einer 10%igen
Sorbit-Lösung wie in Beispiel 1 in einem Tellermischer
gemischt und zu einem staubfreien und rieselfähigen
Compound granuliert.

Über- und Unterkorn können durch Siebung abgetrennt werden.

Beispiel 6:

300 Tl. Bleimennige werden mit 15 Tl. einer 2,5%igen
Methylcellulose-Lösung, die 0,7 Tl. Glycerin enthält,
wie in Beispiel 1 gemischt und zu einem staubfreien
und rieselfähigen Compound granuliert.

Über- und Unterkorn können durch Siebung abgetrennt werden.

Beispiel 7:

300 Tl. Bleimennige oder eines Gemisches aus 210 Tl. Bleistaub und 90 Tl. Bleimennige werden wie in Beispiel 1
mit 30 Tl. einer Lösung gemischt, die 0,25 Tl. Methylcellulose (niedrigviskos) und 1,25 Tl. $H_2SO_4$ enthält.
Nach entsprechender Mischzeit bildet sich ein staubfreier
und rieselfähiger Compound mit ausgezeichneter Fließfähigkeit, die besondere Vorteile bringt beim Befüllen der positiven Röhrchenelektroden von Bleiakkumulatoren.

Über- und Unterkorn können durch Siebung abgetrennt werden.

Beispiel 8:

300 Tl. Bleistaub, bestehend beispielsweise aus 70 % PbO und 30 % Pb, werden wie in Beispiel 1 und 7 mit 30 Tl. einer Mischung gemischt, die 0,25 Tl. Methylcellulose (niedrigviskos) und 1,25 Tl. $H_2SO_4$ enthält. Nach entsprechender Mischzeit bildet sich ein staubfreier und rieselfähiger Compound.

Über- und Unterkorn können durch Siebung abgetrennt werden.

Beispiel 9:

300 Tl. Bleiglätte werden mit 15 Tl. einer Hydroxyäthylcellulose (2 %) (hochviskos) und 2,5 Tl. einer 62 %igen $HNO_3$-Lösung gemischt und zu einem staubfreien und rieselfähigen, besonders oberflächenharten Compound mit ausgezeichnetem Fließverhalten granuliert.

Über- und Unterkorn können durch Siebung abgetrennt werden.

Beispiel 10:

300 Tl. Bleiglätte werden mit 15 Tl. einer Carboxymethylcellulose (2 %) (hochviskos) und 2,5 Tl. einer 62%igen $HNO_3$-Lösung gemischt und zu einem staubfreien und rieselfähigen, besonders oberflächenharten Compound mit ausgezeichnetem Fließverhalten granuliert.

Über- und Unterkorn können durch Siebung abgetrennt werden.

Beispiel 11:

300 Tl. Bleimennige werden einem Teller- oder Muldenmischer zugeführt und anschließend mit 6 Tl. KOH,
gelöst in 3 Tl. $H_2O$, gemischt. Anschließend werden
9 Tl. einer 3%igen Hydroxyäthylcellulose-Lösung (niedrigviskos) zugefügt und weitere 5 min gemischt. Es bildet
sich ein staubfreies und rieselfähiges Weichgranulat,
das die in Beispiel 1 angeführten Eigenschaften aufweist.

Über- und Unterkorn können durch Siebung abgetrennt werden.

Beispiel 12:

300 Tl. Bleiglätte-Schmelzgranulat werden mit 0,75 Tl.
KOH, gelöst in 0,75 Tl. $H_2O$, und nach Zugabe von 1,5 Tl.
Methylhydroxyäthylcellulose-Lösung, 3 %ig (niedrigviskos), in einem Tellermischer gemischt und zu einem
staubfreien Compound abgebunden.

Über- und Unterkorn können durch Siebung abgetrennt werden.

Beispiel 13:

300 Tl. Bleiglätte werden gemäß Beispielen 1, 2 und 3 mit
18 Tl. einer 3%igen Hydroxypropylmethylcellulose (mittelviskos) gemischt und nach Zugabe von 6 Tl. Kaliwasserglas (35 °Bé, ca. 34 % Feststoff) zu einem staubfreien
und rieselfähigen Compound granuliert.

Über- und Unterkorn können durch Siebung abgetrennt werden.

Beispiel 14:

300 Tl. Bleiglätte werden mit 6 Tl. KOH, gelöst in 3 Tl.
$H_2O$, 6 Tl. Methylhydroxyäthylcellulose-Lösung, 2 %ig
(hochviskos) und 6 Tl. Kaliwasserglas, 30 bis 40°Bé,
in der in den vorgenannten Beispielen beschriebenen
Weise gemischt und nach entsprechender Mischzeit zu einem staubfreien und rieselfähigen Compound granuliert.

Nach partieller Wasserverdampfung auf einen Feuchtigkeitsgehalt von ca. 1,2 % wurde ein gegenüber dem nach Beispiel 1 hergestellten Compound härteres Granulat erhalten, das ebenfalls noch staubfrei war, aber eine noch etwas bessere Rieselfähigkeit aufwies.

Über- und Unterkorn können durch Siebung abgetrennt werden.

Beispiel 15:
277,4 Tl. $SiO_2$, 114,6 Tl. PbO oder $Pb_3O_4$, 53,9 Tl. $K_2CO_3$ calc., 11,2 Tl. Borax, 24,6 Tl. Soda calc., 11,9 Tl. $KNO_3$, 1,1 Tl. $As_2O_3$ werden mit 2,2 Tl. KOH, gelöst in 1,1 Tl. $H_2O$, gemischt, mit 2,2 Tl. Methylcellulose-Lösung, 3 %ig (mittelviskos) und anschließend mit 2,2 Tl. Kaliwasserglas, 35 °Bé, versetzt und zu einem staubfreien und rieselfähigen Compound granuliert.

Über- und Unterkorn können durch Siebung abgetrennt werden.

Patentansprüche

1. Verfahren zur Herstellung von staubfreien und rieselfähigen Bleiträger-Compounds für die Glas-, Keramik- und Akkumulatorenindustrie, bei dem Bleiträger aus Bleiglätte (über 97 % PbO), Bleiglätte-Schmelzgranulat, Bleisilikat, Bleimennige, Bleimennige-Bleiglätte, Bleistaub (50 - 97 % PbO, Rest Pb) und Bleistaub-Bleioxid bzw. Bleistaub-Bleimennige-Mischungen mit polymeren Verbindungen versetzt, damit vermischt und granuliert werden, dadurch gekennzeichnet, daß man den Bleiträgern als polymere Verbindung wasserlösliche organische makromolekulare Stoffe, die aufgrund ihrer Struktur eine Wasserretention bewirken, für sich allein oder in Kombination miteinander, gelöst in Wasser und gegebenenfalls zusammen mit als Stabilisiermittel wirkenden Verbindungen und den für den angestrebten Verwendungszweck benötigten Zusatzstoffen zusetzt, und in Scherkräfte erzeugenden Mischvorrichtungen vermischt.

2. Verfahren nach Anspruch 1, dadurch gekennzeichnet, daß man als wasserlösliche organische makromolekulare Stoffe Polysaccharide einsetzt.

3. Verfahren nach Anspruch 1 und 2, dadurch gekennzeichnet, daß man Celluloseäther vom Typ Alkylcellulosen einsetzt.

4. Verfahren nach Anspruch 3, dadurch gekennzeichnet, daß man Alkylhydroxyalkylcellulosen, gereinigte Carboxyalkylcellulosen oder Hydroxyalkylcellulosen einsetzt.

5. Verfahren nach Anspruch 1 und 2, dadurch gekennzeichnet, daß man aufbereitete natürliche wasserlösliche Polysaccharide auf der Basis von Galaktose und Mannose einsetzt.

6. Verfahren nach Anspruch 1 und 2, dadurch gekennzeichnet, daß man als wasserlösliche organische makromolekulare Stoffe Stärke und/oder deren Derivate einsetzt.

7. Verfahren nach Anspruch 1 und 6, dadurch gekennzeichnet, daß man als wasserlöslichen organischen makromolekularen Stoff Abbauprodukte der Stärke vom Typ Dextrin einsetzt.

8. Verfahren nach Anspruch 1, dadurch gekennzeichnet, daß man als wasserlösliche organische markomolekulare Stoffe Polyvinylalkohole einsetzt.

9. Verfahren nach Anspruch 1, dadurch gekennzeichnet, daß man als wasserlösliche organische makromolekulare Stoffe Polyacrylate einsetzt.

10. Verfahren nach Ansprüche 1 bis 9, dadurch gekennzeichnet, daß man die wasserlöslichen organischen makromolekularen Stoffe in Konzentration von 0,1 bis 3 %, insbesondere 0,3 bis 0,5 %, bezogen auf Bleiträger, einsetzt.

11. Verfahren nach Ansprüche 1 bis 9, dadurch gekennzeichnet, daß man vorzugsweise die wasserlöslichen organischen makromolekularen Stoffe in Konzentration von 0,02 bis 0,5 %, insbesondere 0,04 bis 0,3 %, bezogen auf Bleiträger, einsetzt.

12. Verfahren nach Ansprüche 1 bis 11, dadurch gekennzeichnet, daß man die wasserlöslichen organischen makromolekularen Stoffe in Form von 1 bis 10%igen wässrigen Lösungen einsetzt.

13. Verfahren nach Ansprüchen 1 bis 12, dadurch gekennzeichnet, daß man den Bleiträgern zusätzlich als Stabilisiermittel Monosaccharide sowie deren Derivate vom Typ Sorbit, Oligosaccharide sowie deren Derivate vom Typ Rohrzucker, oder Polyalkohole sowie deren Derivate vom Typ Glycerin in Konzentration von 0,1 bis 3 %, insbesondere 0,1 - 1 %, vorzugsweise 0,3 - 0,5 %, zusetzt.

12. Verfahren nach Ansprüchen 1 bis 8 und 10 bis 13, dadurch gekennzeichnet, daß man den Bleiträgern als Stabilisiermittel organische bzw. anorganische Säuren in Konzentration von 0,2 - 10 %, insbesondere 0,2 - 2 %, vorzugsweise 0,4 - 0,5 % zusetzt.

16. Verfahren nach Anspruch 14, dadurch gekennzeichnet, daß man als Säure Gluconsäure, Essigsäure, $H_2SO_4$ oder $HNO_3$ einsetzt.

17. Verfahren nach Ansprüchen 1 bis 13, dadurch gekennzeichnet, daß man den metallfreien Bleiträgern als Stabilisiermittel KOH und/oder NaOH und/oder Natron- bzw. Kali-Wasserglas zusetzt.

18. Verfahren nach Anspruch 16, dadurch gekennzeichnet, daß man KOH und NaOH in Konzentration von 0,2 - 2 %, insbesondere 0,5 - 2 % und/oder Natron- bzw. Kali-Wasserglas in Konzentration von 0,5 - 5,0 %, insbesondere 0,5 - 3 %, einsetzt.

19. Verfahren nach Ansprüchen 1 bis 17, dadurch gekennzeichnet, daß man die in Wasser gelösten organischen makromolekularen Stoffe und die in Wasser gelösten Stabilisiermittel nacheinander den Bleiträgern zugibt.

19. Verfahren nach Ansprüchen 1 bis 18, dadurch gekennzeichnet, daß man den Bleiträgern als Zusatzstoffe für die Glasherstellung Läuterungsmittel, Carbonate, Nitrate, Metalloxide, Silikate und/oder den Glashauptbestandteil $SiO_2$ zusetzt.

20. Verfahren nach Ansprüchen 1 bis 19, dadurch gekennzeichnet, daß das Mischen ohne aktives Erhitzen erfolgt.

1/1

# EUROPÄISCHER RECHERCHENBERICHT

**Europäisches Patentamt**

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | FR - A - 1 358 204 (ASSOCIATED LEAD MANUFACTURERS LTD.) <br> * Anspruch I, Seite 1, Spalte 1, Zeilen 18 bis 37 * <br> -- | 1 | C 01 G 21/00 <br> C 03 C 1/02 <br> C 09 C 1/14 |
| D | FR - A - 1 162 471 (ACCUMULATOREN-FABRIK AG) <br> * AnsprücheA * <br> -- | 1 | |
| A,D | DE - A1 - 2 604 457 (ASSOCIATED LEAD MANUFACTURERS LTD.) <br> -- | | **RECHERCHIERTE SACHGEBIETE (Int. Cl.³)** |
| A,P | EP - A1 - 0 017 521 (STE MINIERE ET METALLURGIQUE DE PENARROYA) <br> -- | | B 01 J 2/28 <br> C 01 G 21/00 <br> C 01 G 21/02 |
| A | FR - A - 2 175 083 (MIZUSAWA KAGAKU KOGYO K.K.) <br> & DE - C - 2 310 637 <br> ----- | | C 03 C 1/02 <br> C 09 C 1/14 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt | | |
|---|---|---|---|
| Recherchenort | Abschlußdatum der Recherche | Prüfer | |
| Berlin | 08-07-1981 | ASSOGNA | |

EPA form 1503.1 06.78